# EUROPÄISCHE PATENTANMELDUNG

(11) **EP 2 626 331 A2**
(43) Veröffentlichungstag der Anmeldung: **14.08.2013**
(21) Anmeldenummer: 12178631.3
(22) Anmeldetag: 31.07.2012
(51) Int. Cl.: C02F 3/04, B01D 39/06, C02F 3/10, C02F 103/00

(54) **Filtermaterial aus Kalksteinsand, insbesondere Hartkalkstein, Edelbrechsand, Herstellung und Verwendung desselben für die Reinigung verschiedener Abwässer**

(30) Priorität: 02.08.2011 DE 102011080259
(71) Anmelder: Adolf Steinbach Steinindustrie- Schotterwerke GmbH & Co. KG, 97616 Salz (DE)
(72) Erfinder: Steinbach, Jochen, 97616 Bad Neustadt (DE)
(74) Vertreter: HOFFMANN EITLE

(57) **Zusammenfassung**

Die vorliegende Erfindung betrifft ein Filtermaterial umfassend Kalksteinsand sowie dessen Herstellung und Verwendung. Das Filtermaterial ist durch eine bestimmte Körnung gekennzeichnet. Die erfindungsgemäßen Verwendungen umfassen die Reinigung von Hofabflüssen von Biogasanlagen und die Reinigung von Regenwasser auf Verkehrsflächen.

## Beschreibung

### 1. Gebiet der Erfindung

Die vorliegende Erfindung betrifft ein Filtermaterial aus Kalksteinsand, insbesondere Kalksteinbrechsand, mit einem hohen CaCO₃-Gehalt, das eine hohe hydraulische Leistungsfähigkeit und ein großes stoffliches Leistungsvermögen besitzt. Die vorliegende Erfindung betrifft weiterhin die Verwendung dieses Filtermaterials für die Reinigung verschiedener Abwässer und insbesondere Hofabflüsse von Biogasanlagen.

### 2. Hintergrund der Erfindung

Die Verwendung von Kalksteinsand, wie z.B. Kalksteinbrechsand, zur Abwasserfiltration bzw. Wasseraufbereitung in Retentionsbodenfiltern ist aus dem deutschen Gebrauchsmuster DE 20 2007 008 765 U bekannt. Die in diesem Gebrauchsmuster getesteten Kalksteinbrechsande wiesen jedoch relativ geringe hydraulische Leistungsfähigkeiten (kf-Werte von 1 bis 11*10⁻⁵ m/s) auf. Derartige hydraulische Leistungsfähigkeiten sind für Retentionsbodenfilteranlagen sinnvoll und erforderlich. Es gibt jedoch andere Anwendungen, wie beispielsweise die Filtration von Regenwasser auf Verkehrsflächen wie z.B. Parkplätzen, bei denen höhere hydraulische Leistungsfähigkeiten wünschenswert sind (da zumeist das Anlegen größerer Pufferspeicher nicht realisierbar oder zumindest nicht praktikabel ist).

Ebenfalls bekannt ist aus dem deutschen Gebrauchsmuster DE 20 2010 007 934 U ein Filtermaterial, welches insbesondere durch eine symmetrische Körnungslinie (d.h. in etwa gleiche Massenanteile der Feinsandfraktionen und der Grobsandfraktionen) gekennzeichnet ist. Das in dieser Gebrauchsmusterschrift gelehrte Filtermaterial soll auch bei kleinen Filtermächtigkeiten stabil sein und eine hohe Filterqualität ermöglichen. Die hydraulische Leistungsfähigkeit des beschriebenen Materials ist nicht angegeben. Die Herstellung dieses Filtermaterials ist jedoch aufwändig, da sie ein Hinzufügen von Feinsand und insbesondere Mittelsand zu konventionellem Brechsand mit asymmetrischer Körnungslinie umfasst.

### 3. Zusammenfassung der Erfindung

Im Hinblick auf diesen Stand der Technik liegt der vorliegenden Erfindung die Aufgabe zugrunde, ein Filtermaterial bereitzustellen, welches eine hohe hydraulische Leistungsfähigkeit mit akzeptabler Filterleistung vereint, welches stabil ist und welches sich einfach herstellen lässt.

Die der Erfindung zugrunde liegende Aufgabe wird durch das in Anspruch 1 gekennzeichnete Filtermaterial gelöst. Bevorzugte Ausführungsformen des erfindungsgemäßen Filtermaterials sind in nachfolgenden Ansprüchen 2 bis 3 beschrieben.

Die vorliegende Erfindung bezieht sich weiterhin auf die Verwendung des erfindungsgemäßen Filtermaterials in der Reinigung von Hofabflüssen von Biogasanlagen. Dieser Aspekt der vorliegenden Erfindung ist durch die Merkmale des nachfolgenden Anspruches 4 gekennzeichnet. Eine bevorzugte Ausführungsform dieses erfindungsgemäßen Aspekts ist in dem hiervon abhängigen Patentanspruch 5 beschrieben. Die vorliegende Erfindung betrifft weiterhin die für diese Verwendung einsetzbare Reinigungsanlage sowie deren Betrieb. Diese Aspekte der vorliegenden Erfindung sind in nachfolgenden Ansprüchen 6 bis 8 (Reinigungsanlage) und 9 bis 10 (Reinigungsverfahren) beschrieben.

Die vorliegende Erfindung bezieht sich weiterhin auf die Verwendung des erfindungsgemäßen Filtermaterials für die Filtration von Regenwasser, welches über befestigte Flächen wie z.B. Verkehrsflächen abfließt. Gemäß dieser Ausführungsform wird das Filtermaterial vorzugsweise eingesetzt als Fugen- und/oder Bettungsmaterial in Pflasterböden und/oder in Regenwasserablaufrinnen, welche typischerweise in versiegelten Verkehrsflächen wie z.B. Parkplätzen Verwendung finden. Dieser Aspekt der vorliegenden Erfindung ist in Ansprüchen 11 bis 13 beschrieben. Das gemäß dieser Verwendung hergestellte Pflaster stellt einen weiteren Aspekt der vorliegenden Erfindung dar. Dieser Aspekt ist beispielsweise in den nachfolgenden Ansprüchen 14 bis 15 beschrieben.

Schlussendlich betrifft die vorliegende Erfindung auch die Verwendung des erfindungsgemäßen Filtermaterials zur Adsorption von NaCl, Öl und/oder Zink und/oder zur Senkung des CSB-Werts (also des Gehalts an organischen Substanzen) in wässrigen Flüssigkeiten. Dieser Aspekt der vorliegenden Erfindung ist in Anspruch 16 beschrieben.

### 4. Beschreibung der Figuren

**Figur 1** zeigt den in Beispiel 2 gewählten Versuchsaufbau eines Pflasters in einer PVC-Wanne

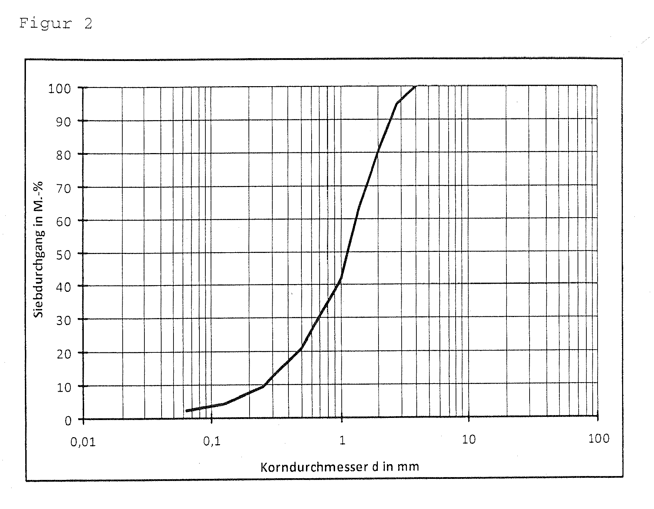

**Figur 2** zeigt eine Körnungslinie eines erfindungsgemäßen Filtermaterials welches sich insbesondere als Fugenmaterial eignet.

### 5. Ausführliche Beschreibung der Erfindung

### 5.1 Definitionen

### 5.1.1 Kalksteinsand

Kalksteinsand im Sinne der Erfindung ist ein festes Material, das durch die folgende Korngrößen- und Zusammensetzungseigenschaften gekennzeichnet ist.

Kalksteinsand im Sinne der Erfindung zeichnet sich durch eine Korngrößenverteilung aus, die einer der Kategorien Feinkies, Sand, Schluff und Ton gemäß DIN 4022 entspricht, oder die durch Mischung von Materialien mit Korngrößen entsprechend zweier oder mehrerer der genannten Kategorien erhalten werden kann.

Kalksteinsand im Sinne der Erfindung besteht zu mindestens 55 Gew.-% aus CaCO₃.

### 5.1.2 Kalksteinbrechsand

Als Kalksteinbrechsand im Sinne der Erfindung wird Kalksteinsand aus Kalkstein gemäß Definition 5.1.1 verstanden, der nach DIN-EN 12620 eine Korngröße von 0 bis 4 mm (Korngruppe D (obere Siebgröße) nicht größer als 4 mm) aufweist, der in dieser Norm als Sand oder feine Gesteinskörnung bezeichnet wird.

### 5.1.3 Korngröße

Bezeichnung für die Teilchengröße in partikulären Substanzen wie Pulvern, Stäuben, Granulaten, körnigen Gemengen und Schuttgütern. Die Korngrößeneinteilung von Sedimenten und Sedimentgesteinen im Sinne der Erfindung wird nach DIN-EN-ISO 14688-1 vorgenommen und ist in Tabelle 1 angegeben:

**Tab. 1: Korngrößeneinteilung der Sedimente und Sedimentgesteine nach DIN-EN-ISO 14688-1**

| | | |
|---|---|---|
| Kies | | >2 bis 63 mm |
| | Grobkies | >20 bis 63 mm |
| | Mittelkies | >6.3 bis 20 |
| | Feinkies | >2 bis 6.3 mm |
| Sand | | >0.063 bis 2 mm |
| | Grobsand | >0.63 bis 2 mm |
| | Mittelsand | >0.2 bis 0.63 mm |
| | Feinsand | >0.063 bis 0.2 mm |
| Schluff | | >0.002 bis 0.063 mm |
| | Grobschluff | >0.02 bis 0.063 mm |
| | Mittelschluff | >0.0063 bis 0.02 mm |
| | Feinschluff | >0.002 bis 0.0063 mm |
| Ton | | < 0.002 mm |

### 5.1.4 Filtermaterial

Als Filtermaterial im Sinne der Erfindung versteht man ein Material, das befähigt ist, aus Wasser einen oder mehrere von Feststoffen, sauerstoffzehrenden Stoffen (chemische Verbindungen, die unter Sauerstoffverbrauch oxidiert werden können), Ammoniumsalze, Ammoniumverbindungen, organischen Aminen, Phosphaten und Schwermetallen zu entfernen.

### 5.1.5 Retentionsbodenfilteranlage

Eine Retentionsbodenfilteranlage (RBF) ist ein offenes Rückhaltebecken mit einer als Bodenfilter ausgebildeten Sohle, in der sich das Filtermaterial befindet.

### 5.1.6 Hydraulische Leitfähigkeit k_{f}

Die hydraulische Leitfähigkeit k_{f} wird auch die Wasserleitfähigkeit oder Durchlässigkeit eines Materials genannt. Die hydraulische Leitfähigkeit ist direkt proportional zu der Wassermenge, die je Zeiteinheit durch einen Fließquerschnitt aus einem Material strömt [m/s]. Der k_{f}-Wert ist somit ein Maß für Wasserdurchlässigkeit eines Materials. Man unterscheidet in einen k_{fA} und k_{fB} Wert. Der k_{fA} Wert ist in DIN 18130-1 definiert und bezieht sich auf den Ausgangswert des frisch bespannten Filtermaterials; der k_{fB} Wert wird hingegen nach mehrjährigem Betrieb der Anlage bestimmt. Im allgemeinen soll der k_{fA} Wert mindestens 10⁻⁴ m/s betragen.

### 5.1.7 Infiltrationsrate IR

Wasservolumen, das je Zeiteinheit in den Boden versickert.

### 5.1.8. Nitrifikation

Unter Nitrifikation versteht man die bakterielle Oxidation von Ammoniak (NH₃) bzw. Ammonium-Ionen (NH₄⁺) zu Nitrat (NO₃⁻).

### 5.2 Filtermaterial

### 5.2.1 Chemische Zusammensetzung

Das erfindungsgemäße Filtermaterial besteht überwiegend aus Kalksteinsand. Der Gewichtsanteil des Kalksteinsands ist bevorzugt 60 Gew.-% oder mehr, stärker bevorzugt 75 Gew.-% oder mehr, noch stärker bevorzugt 85 Gew.-% oder mehr, besonders bevorzugt 95 Gew.-% oder mehr and am stärksten bevorzugt 100 Gew.-%. Somit kann das erfindungsgemäße Filtermaterial einen entsprechenden Anteil eines anderen Materials enthalten. Das andere Material ist nicht festgelegt. Am stärksten bevorzugt ist jedoch die Verwendung von reinem Kalksteinsand.

Der erfindungsgemäße Kalksteinsand hat einen CaCO₃-Gehalt (typischerweise in Form von Calcit oder Aragonit) von 55 Gew.-% oder mehr, bezogen auf das Gesamtgewicht des Kalksteinsands, stärker bevorzugt 65 bis 95 Gew.-%. In einer besonders bevorzugten Ausführungsform liegt der CaCO₃-Gehalt des Kalksteinsandes zwischen 70 und 90 Gew.-%.

### 5.2.2 Korngrößenverteilung

Der in dem erfindungsgemäßen Filtermaterial einzusetzende Kalksteinsand ist durch die folgenden Merkmale gekennzeichnet:

### a. Geringer Feinkornanteil

Der Anteil an Ton und Schluff soll relativ niedrig liegen. Gemäß einer ersten Ausführungsform liegt er bei 7 Gew.-% oder darunter, bevorzugt bei 6 Gew.-% oder darunter, oder sogar bei 5 Gew.-% oder darunter. Die Mindestmenge des Ton- und Schluffanteils liegt bei dieser Ausführungsform bevorzugt bei 2 Gew.-% oder mehr, stärker bevorzugt bei 3 Gew.-% oder sogar bei 4 Gew.-% oder mehr. Das Filtermaterial dieser Ausführungsform eignet sich besonders gut für die Reinigung von Hofabflüssen insbesondere von Biogasanlagen, wie sie im nachfolgenden Abschnitt 5.3 beschrieben wird. Gemäß einer zweiten Ausführungsform liegt der Anteil an Ton und Schluff noch etwas niedriger, nämlich bei 6 Gew.-% oder darunter, bevorzugt bei 5 Gew.-% oder darunter, stärker bevorzugt bei 4,5 Gew.-% oder darunter. Mindestmengen der Ton- und Schluffanteile liegen in dieser Ausführungsform bevorzugt bei 1 Gew.-% oder mehr, stärker bevorzugt bei 1,5 Gew.-% oder mehr, und besonders bevorzugt bei 2 Gew.-% oder mehr. Das Filtermaterial dieser Ausführungsform eignet sich besonders gut für die Verwendung als Fugen- und/oder Bettungsmaterial, wie es in nachfolgendem Abschnitt 5.4 beschrieben ist. Neben diesen beiden Ausführungsformen ist es überdies möglich im Rahmen der vorliegenden Erfindung gemäß einer weiteren alternativen Ausführungsform den Anteil an Ton und Schluff noch weiter zu senken, so dass dieser Anteil bei 4 Gew.-% oder darunter liegt, bevorzugt bei 3 Gew.-% oder darunter, stärker bevorzugt bei 2 Gew.-% oder darunter, am stärksten bevorzugt bei 1,5 Gew.-% oder weniger. Gemäß dieser alternativen Ausführungsform ist die Mindestmenge an Ton und Schluff nicht näher festgelegt. Sie kann beispielsweise bei 0.5 Gew.-% liegen oder bei 1 Gew.-%.

Weiterhin ist bevorzugt, dass der Anteil an Ton, Schluff und Feinsand relativ niedrig liegt. Für die erste oben beschriebene Ausführungsform liegt dieser Anteil bevorzugt im Bereich von 5 Gew.-% bis 23 Gew.-%, stärker bevorzugt bei 6 Gew.-% bis 20 Gew.-%, besonders bevorzugt bei 7 Gew.-% bis 18 Gew.-%. Für die zweite oben beschriebene Ausführungsform liegt der Anteil bevorzugt im Bereich von 2 Gew.-% bis 20 Gew.-%, stärker bevorzugt bei 3 Gew.-% bis 16 Gew.-%, besonders bevorzugt bei 4 Gew.-% bis 14 Gew.-%. Bei der oben beschriebenen alternativen Ausführungsform liegt der Anteil an Ton, Schluff und Feinsand bevorzugt im Bereich von 1 Gew.-% bis 16 Gew.-%, stärker bevorzugt bei 1,5 Gew.-% bis 12 Gew.-%, besonders bevorzugt bei 2 Gew.-% bis 8 Gew.-%.

Die nachfolgenden Angaben gelten für alle oben beschriebenen Ausführungsformen gleichermaßen.

### b. Asymmetrische Körnungslinie

Im Gegensatz zu der Lehre von DE 20 2010 007 934 U ist das Vorliegen einer asymmetrischen Körnungslinie im Rahmen der vorliegenden Erfindung durchaus akzeptabel. Das Vorliegen einer asymmetrischen Körnungslinie ist sogar bevorzugt, da dies es gestattet, die künstliche Beimengung bestimmter Sandfraktionen zu vermeiden.

### c. Stetig monoton ansteigende Körnungslinien

Die gewünschte Stabilität des Filtermaterials wird erzielt indem die Mengenverhältnisse der verschiedenen Korngrößenbereiche aufeinander abgestimmt sind. Insbesondere soll die Körnungslinie (in halblogarithmischer Darstellung) stetig monoton ansteigen.

Weiterhin soll die Körnungslinie vom Feinkornbereich zum Mittelbereich steil ansteigen. Dieser steile Anstieg wird ausgedrückt durch das Verhältnis des Mengenanteils an Mittelsand zu dem Mengenanteil an Ton, Schluff und Feinsand. Besagtes Mengenverhältnis soll bei 2,0 oder darüber liegen, bevorzugt bei 2,2 oder darüber und noch stärker bevorzugt bei 2,3 oder mehr.

### d. Mögliches Vorliegen grobkörniger Fraktionen

Im Gegensatz zu dem oben zitierten Stand der Technik ist es gemäß vorliegender Erfindung möglich (aber nicht zwingend erforderlich), dass der Kalksteinsand neben Ton-, Schluff- und Sandfraktionen auch grobkörnigere Bestandteile im Feinkies-oder Mittelkiesbereich aufweist. Diese Bestandteile sollten vorzugsweise weniger als 30 Gew.-% betragen, stärker bevorzugt sollten sie bei 20 Gew.-% oder weniger liegen. Gemäß einer erfindungsgemäßen Ausführungsform liegt der Anteil an Feinkies im Bereich von 0 bis 20 Gew.-%, bevorzugt 1 bis 10 Gew.-%, und der Anteil an Mittelkies im Bereich von 0 bis 2 Gew.-%, bevorzugt 0 bis 1 Gew.-%. Gröbere Fraktionen sollten nach Möglichkeit nicht vorliegen.

Das erfindungsgemäße Filtermaterial ist somit im Vergleich zu den aus dem obigen Stand der Technik bekannten Filtermaterialien durch eine Verschiebung der Körnungslinie hin zu höheren Gehalten an grobkörnigeren Bestandteilen gekennzeichnet. Die Stabilität des Filtermaterials ist durch geeignete Wahl der Mengenverhältnisse der einzelnen Fraktionen gewährleistet.

Diese Verschiebung hin zu gröberen Kalksteinsanden wurde im Rahmen der vorliegenden Erfindung möglich, da überraschenderweise gefunden wurde, dass die benötigten Filterleistungen auch mit der erfindungsgemäßen gröberen Körnung erzielt werden können. Dies ist besonders überraschend, da die Gesamtoberfläche des Filtermaterials durch die gröbere Körnung stark verringert wird.

### 5.2.3 Weitere Bestandteile

Es ist möglich dem erfindungsgemäßen Filtermaterial geringe Mengen (typischerweise weniger als 25 Gew.%, bevorzugt weniger als 15 Gew.%, stärker bevorzugt weniger als 5 Gew.%) anderer Materialien zuzusetzen. Dies können Sande wie Quarzsand sein. Hierbei sollte das zugesetzte Material möglichst keinen signifikanten schädlichen Einfluss auf die hydraulische Leistungsfähigkeit, Verweildauer und Filterwirkung ausüben. Es werden insbesondere anorganische Materialien beigefügt. Die Beimengung organischer Substanzen ist nicht bevorzugt.

### 5.2.4 Herstellung von Kalksteinsand und dessen Eigenschaften

### a. Herstellung von Kalksteinsand

Der erfindungsgemäß zu verwendende Kalksteinsand kann aus herkömmlichem Betonsplitt oder Straßensplitt erhalten werden. Das Ausgangsmaterial kann mittels einer Hochgeschwindigkeitsprallmühle zerkleinert werden und anschließend nach der Korngröße aufgetrennt werden. Es kann sich noch ein Schritt der Abtrennung von Feinpartikeln anschließen. Der resultierende Sand sollte dann Edelbrechsandqualität aufweisen, bei dem die einzelnen Körner bevorzugt in kubischer Form vorliegen, während möglichst keine plattigen Körner vorliegen sollten.

### b. Auftrennung nach Korngröße

Die Abtrennung zu großer Partikel erfolgt üblicherweise mit Sieben. Feinpartikel können durch Entstaubungsverfahren und Windsichterverfahren entzogen und ggf. geregelt zudosiert werden.

In einem bevorzugten Herstellungsverfahren werden die gewünschten Fraktionen nach geeigneter Sieblinie getrennt, und anschließen nach Bedarf zusammendosiert um einen Brechsand vorgegebener Korngröße zu erhalten

### c. Bestimmung der Korngröße

Die Korngrößenbestimmung wird im Labor durch Siebanalyse durchgeführt. In einer Siebmaschine ist ein Satz von Sieben verschiedener Maschenweite übereinander angeordnet. Bei der Siebanalyse wird die Korngröße durch die Maschenweite desjenigen Siebes bestimmt, welches das Korn (Siebdurchlauf, Unterkorn) gerade noch passieren lässt. Daraus ergibt sich eine Einteilung in bestimmte Kornklassen, während die in den einzelnen Kornklassen anfallenden Siebrückstände (Oberkorn) und der Bodentellerinhalt die Korngrößenverteilung bezeichnen (zahlenmäßige Angabe des Anteils der verschiedenen im Untersuchungsgut vorhandenen Korngrößen in Prozent). Die Siebe werden nach lichter Maschenweite (Quadratmaschen) in mm charakterisiert.

### d. Verfahren zur Bestimmung des CaCO₃-Gehalts

Der Gehalt an CaCO₃ wird nach dem Scheibler-Verfahren bestimmt (DIN 18129).

### 5.3 Anwendung Filter für Hofabflüsse

### 5.3.1 Problemstellung

Beim Betrieb von Biogasanlagen werden hoch korrosive Sickersäfte gebildet. Diese Flüssigkeiten sind durch extrem hohe Gehalte an gelösten organischen Substanzen gekennzeichnet (CSB Werte liegen typischerweise im Bereich von 50.000 bis 100.000 mg/l). Diese Sickersäfte werden zur Entsorgung der Restsilage zugegeben und als Düngemittel verwendet.

Neben den Sickersäften sind bei Biogasanlagen auch die Hofabflüsse zu berücksichtigen. Sie entstehen durch Zusammenlaufen von Regenwasser über befestigte (Verkehrs-)Flächen und Abdeckungsplanen in Sammelbecken. Im Gegensätz zu Abflüssen aus Siedlungen enthalten derartige Hofabflüsse aus Biogasanlagen hohe Mengen an gelösten organischen Substanzen (z.B. durch Ladeverluste zwischen Silagesilo und Aufgabebunker; CSB Werte liegen typischerweise im Bereich von 500 bis 2000 mg/l und damit klar über den CSB Werten aus Siedlungsabflüssen, die normalerweise deutlich unter 500 mg/l liegen). Diese Hofabflüsse können ein Entsorgungsproblem darstellen: Einerseits ist die Konzentration an gelösten organischen Substanzen zu niedrig um diese Abflüsse den Sickersäften und der Restsilage zuzugeben und so der Entsorgung als Düngemittel zuzuführen. Andererseits ist der Gehalt an gelösten organischen Substanzen so hoch, dass eine Entsorgung wie bei anderen Hofabflüssen zu einer ernsthaften Gefährdung des Grundwassers führen kann.

In anderen landwirtschaftlichen Betrieben können ebenfalls Hofabflüsse mit vergleichbaren Belastungen an organischen Substanzen entstehen. Hier können beispielsweise Betriebe mit Silos wie z.B. Hochsilos oder Fahrsilos genannt werden.

Diesem Aspekt der vorliegenden Erfindung liegt daher die Aufgabe zu Grunde, eine Vorrichtung sowie ein Verfahren zur Reinigung von Hofabflüssen mit CSB Werten im Bereich von 400 bis 2500 mg/l, bevorzugt im Bereich von 500 bis 2000 mg/l, beispielsweise von Biogasanlagen, bereit zu stellen. Hierbei soll der Gehalt an gelösten organischen Substanzen auf weniger als 30% des ursprünglichen Werts, bevorzugt weniger als 20% und besonders bevorzugt weniger als 10% des ursprünglichen Werts reduziert werden. Diese Filterleistung soll möglichst bei guter hydraulischer Leistungsfähigkeit und Filterstabilität erzielt werden.

Dieses Ziel wird erreicht durch den Einsatz des erfindungsgemäßen Filtermaterials. Grundsätzlich ist die Erzielung der gewünschten Filterleistung auch durch die aus dem zitierten Stand der Technik bekannten Filtermaterialien möglich. Die für die vorliegende Anwendung erforderliche hohe Leistungsfähigkeit bei der Entfernung organischer Substanzen ist an sich überraschend und im Hinblick auf die im Stand der Technik angegebenen Informationen nicht zu erwarten. So liegt beispielsweise die Belastung mit organischen Substanzen in den durch Retentionsbodenfilteranlagen zu reinigen Wässern um ein Vielfaches unter der Belastung von Hofabwässern von Biogasanlagen. Die Erzielung einer ausreichend hohen Filterleistung für die Reinigung von derartig hoch belasteten Wässern ist auch in Anbetracht der bekannten Eigenschaften von Kalksteinsand nicht zu erwarten. Somit betrifft eine weitere Ausführungsform der vorliegenden Erfindung die Verwendung von Kalksteinsand aus anderen Quellen, wie beispielsweise die in DE 20 2007 008 765 U und DE 20 2010 007 934 U beschriebenen Kalksteinsande, zur Reinigung von Hofabwässern von Biogasanlagen. Diese Ausführungsform ist jedoch weniger bevorzugt als die Verwendung des erfindungsgemäßen Filtermaterials.

### 5.3.2 Aufbau Filter

Der erfindungsgemäße Filter beinhaltet ein Rückhaltebecken mit einer als Bodenfilter ausgebildeten Sohle, in der sich das Filtermaterial befindet. Das Rückhaltebecken ist typischerweise offen ausgebildet.

Die Dimensionierung des Filters ist nicht näher festgelegt. Sie wird vorteilhafterweise den an sie gestellten Anforderungen angepasst. D.h. sie richtet sich nach dem gewünschten Durchsatz an zu reinigender Flüssigkeit. Bei der Wahl einer geeigneten Dimensionierung kann man sich an den folgenden Richtwerten orientieren: Bei einer Füllhöhe des Rückhaltebeckens von 0,75 m ist es vorteilhaft die Fläche des Rückhaltebeckens so zu dimensionieren, dass bei der zu erwartenden Menge an zu reinigender Flüssigkeit und dem zu erwartenden CSB Wert eine CSB-Filterbelastung von ca. 100 g/m²*d eingestellt werden kann.

### 5.3.3 Aufbau Reinigungsvorrichtung

Die erfindungsgemäße Reinigungsvorrichtung umfasst einen oder mehrere der erfindungsgemäßen Filter. Dem bzw. den Filter(n) ist vorteilhafterweise ein Pufferbecken vorgeschaltet. Dieses Pufferbecken gestattet eine Abtrennung fester Bestandteile mittels Sedimentation. Durch diese vorgeschaltete Retention können kolmationsverursachende Feinpartikel weitgehend quantitativ sedimentiert werden. Überdies kann über das Pufferbecken die Zugabemenge an zu reinigender Flüssigkeit an den/die Filter so reguliert werden, dass eine kritische CSB-Flächenbelastung nicht überschritten wird. Hierfür werden vorteilhafterweise Pumpen eingesetzt. Die Unterschreitung der kritischen CSB-Flächenbelastung kann durch eine Überwachung der dem Filter zugeführten Flüssigkeitsmenge unter Berücksichtigung eines vorab bestimmten mittleren CSB-Werts des Hofabflusses gewährleistet werden.

Für die Reinigungsleistung ist unter anderem die Verweilzeit der Flüssigkeit im Filter relevant. Diese Verweilzeit kann durch die Korngrößenverteilung des Filtermaterials beeinflusst werden. Das erfindungsgemäße Filtermaterial eignet sich für eine effektive Filtration bei niedrigen oder mittleren Belastungen an organischen Substanzen. Falls eine höhere Reinigungswirkung erforderlich ist, ist es möglich, die Verweilzeit durch eine Kontrolle der Dränabflussmenge zu erhöhen. Dies kann über ein regelbares Ventil am Dränablauf erreicht werden.

Da der CSB-Konzentrationsbereich bei den Hofabflüssen verschiedener Biogasanlagen variieren kann, sollte vor einem Bau eines Bodenfilters ein für die betreffende Biogasanlage typischer gemittelter CSB-Wert bestimmt werden. Liegt dieser Wert über etwa 800-900 mg CSB/l, sollte eine zweistufige Filtration in Betracht gezogen werden. Möglich ist auch eine Herabsetzung des Wertes durch Zugabe von gering belastetem Wasser.

Entsprechend kann die erfindungsgemäße Reinigungsanlage zweistufig ausgebildet sein, wobei die in Reihe geschalteten Filter im Hinblick auf Dimensionierung und Filtermaterial gleich sein oder sich voneinander unterscheiden können.

Weiterhin kann die erfindungsgemäße Reinigungsanlage mit einer Vorrichtung für die Zugabe von gering belastetem Wasser ausgestattet sein. Das gering belastete Wasser kann dem höher belasteten Hofabfluss zu einem beliebigen Zeitpunkt vor der Filtration zugegeben werden. Beispielsweise kann das gering belastete Wasser in das oben genannte Pufferbecken geleitet werden.

### 5.3.4 Betrieb Reinigungsvorrichtung

Beim Betrieb der Reinigungsvorrichtung wird die zu reinigende Flüssigkeit (der Hofabfluss) dem Filter bzw. den Filtern zugeführt. Dies erfolgt vorteilhafterweise über ein Pufferbecken mittels geeigneter Pumpvorrichtungen.

Die zu reinigende Flüssigkeit läuft durch das Filtermaterial und durch den Dränabfluss. Die so erhaltene gereinigte Flüssigkeit kann auf üblichem Wege abgeleitet werden.

Ebenso ist es vorteilhaft die Reinigungsvorrichtung diskontinuierlich zu betreiben. Hierbei wird der einzelne Filter mit einer zu reinigenden Charge beschickt. Die zu reinigende Flüssigkeit läuft während der gewünschten Verweilzeit durch den Filter und verlässt diesen durch den Auslass. In dieser Phase lässt man den Filter trocken fallen. Diese Maßnahme hat zwei Vorteile: Zum einen nimmt das Filtermaterial im trockenen Zustand mehr Sauerstoff auf. Zum anderen bildet sich während des Betriebs ein Film auf der Oberfläche des Filters, welcher die Penetration behindert (d.h. die hydraulische Leitfähigkeit senkt). Das trocken fallen des Filtermaterials führt zu einem Aufplatzen des gebildeten Films und somit zu einer Reaktivierung und Verbesserung der hydraulischen Leitfähigkeit.

Die eingetragenen gelösten organischen Substanzen werden mikrobiell abgebaut, so dass es bei ordnungsgemäßem Betrieb nicht erforderlich ist das Filtermaterial zu erneuern oder zu reinigen.

### 5.4 Anwendung Fugen- und Bettungsmaterial, Verwendung in Filtersubstratrinnen

### 5.4.1 Problemstellung

Regenwasser, das über Verkehrsflächen abfließt, trägt typischerweise eine erhöhte Last des Schwermetalls Zink. Gleiches gilt oft auch für Wasser, das über Siedlungsflächen abfließt, beispielsweise weil es außen an verzinkten Regenrinnen entlang gelaufen ist. Überdies kann das Wasser - besonders auf Parkplätzen - geringe Mengen von Mineralöl wie z.B. Motorentropföl sowie - besonders im Winter - Tausalze (wie z.B. NaCl) enthalten.

Es ist daher wünschenswert dass bei Siedlungs- und Verkehrsflächen wie z.B. Parkplätzen oder Straßenrandbefestigungen Materialien zum Einsatz kommen, welche in der Lage sind die oben genannten Schadstoffe zu binden.

Diese Aufgabe wird durch die Verwendung des erfindungsgemäßen Filtermaterials gelöst. Die Verwendung alternativer Filtermaterialien aus Kalksteinsand wie z.B. aus den beiden oben genannten Dokumenten des Stands der Technik ist zwar im Rahmen der vorliegenden Erfindung denkbar aber weniger bevorzugt. Das Beimengen eines Bestandteils an organischem Material ist weder erforderlich noch wünschenswert.

Das einzusetzende Filtermaterial wird weiterhin vorzugsweise so gewählt, dass es bei der Verwendung als Fugen-und/Bettungsmaterial den technischen Anforderungen der ZTV Pflaster-StB 06, TL Pflaster-StB 06 sowie DIN 18200 entspricht.

Die Verwendung von Filtermaterial, enthaltend mindestens 60 Gew.-% Kalksteinsand wie z.B das oben beschriebene Filtermaterial, gestattet eine wirksame Adsorption und Unschädlichmachung der oben genannten Schadstoffe:
● Die typischerweise bei einem tropfenden Motor auftretenden Ölmengen werden von dem Filtermaterial effizient adsorbiert und ausreichend lange zurückgehalten um eine Mineralisierung und nachfolgende Abgabe in unschädlicher Form zu gestatten.
● Salz wie z.B. Tausalz wird von dem Filtermaterial effizient adsorbiert und anschließend in kleinen an sich unschädlichen Dosen wieder abgegeben.
● Zink wird effizient adsorbiert und dauerhaft gebunden.

### 5.4.2 Aufbau Pflaster

Handelt es sich bei der Verkehrsfläche um ein Pflaster, so kann die obige Zielsetzung insbesondere durch geeignete Wahl des Fugen- und/oder Bettungsmaterials erzielt werden.

Herkömmliches Pflaster ist zumindest durch eine obere aus Pflastersteinen und Fugenmaterial gebildete Schicht, sowie eine darunter liegende Schicht aus Bettungsmaterial gekennzeichnet. Die obere Schicht hat typischerweise eine Dicke von 5-20 cm, während die Schicht aus Bettungsmaterial typischerweise eine Dicke von 2-8 cm aufweist.

Optional kann unter der Schicht aus Bettungsmaterial eine Frostschutzschicht mit einer typischen Stärke von 0-30 cm liegen.

Zusätzliche Schichten sind möglich aber nicht erforderlich. Beispielsweise kann zwischen Frostschutzschicht und Bettungsmaterial eine Tragschicht in gebundener Bauweise z.B. Asphalt oder Beton vorliegen.

### 5.4.3 Verwendung in Regenwasserablaufrinnen

Ist die betreffende Verkehrsfläche beispielsweise durch einen Asphaltbelag versiegelt, so sind bei größeren Flächen Regenwasserablaufrinnen vorzusehen. Die obige Zielsetzung kann erreicht werden indem das erfindungsgemäße Filtermaterial in der Regenwasserablaufrinne eingesetzt wird.

Hierbei ist die Regenwasserablaufrinne bevorzugt so zu dimensionieren, dass die zu erwartenden Regenwasserabflussmengen von dem Rinnenvolumen aufgenommen werden können. Beispielsweise ist es vorteilhaft bei einem Parkplatz Regenwasserablaufrinnen so vorzusehen, dass pro m² Parkplatzfläche etwa 10-20 l Wasservolumen durch die Regenwasserablaufrinne aufgenommen werden können.

Die Form der Rinne sollte so gewählt sein, dass das ablaufende Regenwasser das erfindungsgemäße Filtermaterial passieren muss bevor es in den Untergrund oder die Kanalisation abfließen kann.

Diese Wirkung kann beispielsweise erzielt werden, indem über die gesamte Länge der Rinne eine obere Kammer vorgesehen ist, die zumindest zum Teil mit erfindungsgemäßem Filtermaterial befüllt ist. Unterhalb dieser Kammer befindet sich ein Kanal, durch den das gefilterte Regenwasser abfließen kann. Die obere Kammer und der darunter liegende Kanal sind durch ein geeignetes Sieb getrennt, welches das Regenwasser passieren lässt, nicht aber das erfindungsgemäße Filtermaterial.

In der Rinne sollte sich soviel Filtermaterial befinden, dass das ablaufende Regenwasser einen Mindestweg im Bereich von 5 bis 30 cm, bevorzugt 10 bis 20 cm durch das Filtermaterial zurücklegen muss um zu dem Ablaufkanal zu gelangen.

### 6. Beispiele

### 6.1 Beispiel 1 zur Anwendung Filter für Hofabflüsse

### a. Zielsetzung

Durch Säulenversuche wurde untersucht, ob Hofabflüsse insbesondere von Biogasanlagen durch einen Kalksteinsand-Bodenfilter behandelt werden können. Insbesondere wurde untersucht, ob die hohen gelösten CSB-Gehalte durch mikrobiellen Abbau ausreichend verringert und eine geringe mikrobielle Filterkolmation erreicht werden kann.

### b. Methoden

Es wurden 3 Filter im Säulenversuch geprüft:
*SNr. 1: Filtermaterial 1: Kalksteinbrechsand*
*SNr. 2: Filtermaterial 2: Kalksteinbrechsand*
*SNr. 3: 90% Filtermaterial 1 + 10 % Ilmenitsand*

Die Korngrößenverteilungen der Filtermaterialien 1 und 2 sind wie folgt:

| Sieb | Durchgang, Gew.-% | |
|---|---|---|
| mm | Filtermaterial 1 | Filtermaterial 2 |
| 2,8 | 100 | 100 |
| 2 | 99,5 | 59,8 |
| 1 | 69,8 | 41,2 |
| 0,5 | 35,4 | 22,6 |
| 0,25 | 13,9 | 9,3 |
| 0,125 | 6,3 | 3,7 |
| 0,063 | 4,3 | 2,7 |

Die Säulenhöhe betrug 0,75 m bei einer rechnerischen Lagerungsdichte des Filtersubstrates von 1,50 kg TM/l.

Der Säulenzulauf wurde durch Vermischen eines Sickersafts einer Biogasanlage mit Dachwasser hergestellt. Das Verdünnungsverhältnis des Sickersaftes wurde so eingestellt, dass der Zulauf-CSB-Gehalt bei ca. 500 mg/l lag, was einem typischen Hofabfluss einer Biogasanlage nachempfunden ist.

Die Einzelbeschickungshöhe betrug 0,30 m³/m².

Es wurden insgesamt 30 Beschickungen in 6 Wochen vorgenommen. 4 Beschickungen pro Woche wurden bei einer Dränablaufdrosselung von 0,03 l/s*m² und eine Beschickung bei freiem Dränablauf zur Ermittlung der hydraulischen Betriebsleitfähigkeit vorgenommen.

Bei 18 der 30 Beschickungen wurden chemische Analysen durchgeführt.

### d. Ergebnisse

### Hydraulische Betriebsleitfähigkeit

Die Säulenzuflüsse waren feststofffrei. Die gemessenen CSB-Konzentrationen wie die hydraulische Reaktion der Säulen sind deshalb ausschließlich durch gelöste organische Substanzen verursacht. Im Mittel der 6-wöchigen Säulenversuche betrug die gelöste CSB-Filterbelastung 107 g/m²*d, sie war ca. 5-fach höher als die empfohlene Belastung bei aeroben, vertikalen Bodenfiltern für häusliche und kommunale Abwässer. Trotz dieser sehr hohen Belastung an gelöstem CSB von 107 g pro m² Filterfläche und Tag konnte keine relevante mikrobielle Kolmation festgestellt werden (Tabelle 2).

**Tabelle 2: Hydraulische Betriebsleitfähigkeit der Versuchssäulen**

| | Versuchsbeginn | Versuchsende |
|---|---|---|
| Beschickung | B5 | B30 |
| SNr. | k_{f} in 10⁻⁵ m/s | |
| 1 | 54,4 | 48,4 |
| 2 | 167 | 173 |
| 3 | 15,6 | 21,1 |

Eine besonders grobe Korngrößenverteilung des Filtersubstrates, wie in Säule Nr. 2 geprüft, führt zu einer besonders hohen hydraulischen Leistungsfähigkeit. Die hydraulischen Leistungsfähigkeiten der anderen beiden Proben sind jedoch ebenfalls voll zufriedenstellend.

Nach den vorgenommenen 6-wöchigen Säulenversuchen lässt sich bei 500 mg CSB_{gel}/l im Zulauf eine durchschnittliche kolmationsfreie, hydraulische Filterbelastung von 78 m³/a ermitteln. Dies entspricht ca. der doppelten hydraulischen Filterbelastung von herkömmlich bemessenen Retentionsfiltern.

### Mikrobielle Abbauleistung

Geeignete Voruntersuchungen zeigten, dass die mikrobielle Einarbeitung selbst am Ende der 6-wöchigen Beschickungszeit noch nicht ganz abgeschlossen war. Die mikrobielle Abbauleistung wurde daher ausschließlich zu Versuchsende bestimmt. Es ist davon auszugehen, dass durch weitere mikrobielle Einarbeitung eine weitere Steigerung der mikrobiellen Abbauleistung erzielt werden kann.

Die mikrobielle Abbauleistung von CSB und NH₄-N zu Versuchsende bei noch nicht vollständiger mikrobieller Einarbeitung und hohen Temperaturen von ca. 20°C ist aus Tabelle 4 zu ersehen.

**Tabelle 3: Stoffliches Filterverhalten der Säulen zu Versuchsende bei q_{d} = 0,03 l/s*m²**

| | Zulauf | Ablauf | | |
|---|---|---|---|---|
| | | S1 | S2 | S3 |
| pH | 4, 6 | 7,2 | 7,4 | 7,3 |
| k_{S4.3} in mmol/l | 0,55 | 4,56 | 4,88 | 5,19 |
| Ca in mg/l | 18,8 | 94,1 | 93,5 | 108 |
| CSB in mg/l | 476 | 32,7 | 127 | 80,7 |
| NH₄-N in mg/l | 7,19 | 0,23 | 0,85 | 0,28 |
| NO₃-N in mg/l | 1,78 | 6,55 | 6,21 | 4,72 |

| | | | | |
|---|---|---|---|---|
| S1 Filtermaterial 1 S2 Filtermaterial 2 S3 90 % Filtermaterial 1 + 10 % Ilmenitsand Mittelwerte der Beschickungen B26, B28 bei pH, CSB, NH₄-N, NO₃-N Mittelwerte der Beschickungen B18, B21 bei K_{S4,3}, Ca | | | | |

Das Filtersubstrat der Säule 1 zeigt eine besonders hohe mikrobielle Abbauleistung.

Bemerkenswert ist, dass ein hoher CSB- und gleichzeitiger NH₄-Abbau bei dem sehr weiten CSB/NH₄-N-Verhältnis von ca. 66 möglich ist. Dies zeigt, dass unter den Belastungsverhältnissen der Säulenversuche noch ein vollständig aerober Abbau stattgefunden hat, der einen hohen Nitrifikationsgrad ermöglicht.

### e. Schlussfolgerungen

- Hofabflüsse von Biogasanlagen können durch Bodenfiltration in hohem Umfang von gelöstem CSB und NH₄-N durch aeroben, mikrobiellen Abbau gereinigt werden.
- Das erfindungsgemäße Filtersubstrat besitzt nach mikrobieller Einarbeitung eine hohe Abbauleistung für CSB und NH₄ und eignet sich besonders gut für die Bodenfiltration von Hofabflüssen aus Biogasanlagen.
- Da die Reinigung nicht zu einer Akkumulation von Schadstoffen führt, sondern durch einen regenerativen CSB- und NH₄-Abbau erfolgt, ist das mögliche Betriebsalter mindestens vergleichbar mit dem Betriebsalter von Retentionsbodenfilteranlagen und kann von technischen Bauteilen wie z.B. Pumpen abgesehen, mit 50 Jahren kalkuliert werden.

### 6.2 Beispiel 2 zur Anwendung Fugen- und Bettungsmaterial

### a. Zielsetzung

Es sollte die Bindung von gelöstem Zink durch das erfindungsgemäße Filtermaterial bei dessen Verwendung als Bettungsmaterial und Fugenfilter bei einem Pflasteraufbau (hier Betonstein) geprüft werden. Hierzu wurde im Technikumsmaßstab der Pflasteraufbau von 34 cm Gesamthöhe (8 cm Stein, 5 cm Bettung, 21 cm Frostschutz) zeitgerafft mit einer 100-jährigen, gelösten Zinkfracht belastet. Über die Aufgabekonzentration und die Sickerwasserkonzentration nach 34 cm Sickerstrecke sollte die Bindeleistung des Pflasteraufbaues für Zink geprüft werden. Als ergänzende Leistungsbeurteilung wurden nach dem 1-monatigen Zeitrafferversuch die 4 Schichten des Pflasteraufbaues (Fuge, Bettung, Frostschutz, Dränschicht) auf die Gehalte an Zink untersucht. Zink ist in Wohngebieten und auf Verkehrsflächen eines der am häufigsten vorgefundenen Schwermetalle. Die Eignung zur Bindung von Zink ist daher bei der beabsichtigten Reinigung von Regenwasser aus versiegelten Verkehrsflächen und von ähnlichen Flüssigkeiten von besonders großer Bedeutung.

### b. Versuchsaufbau

### Horizontaler Aufbau

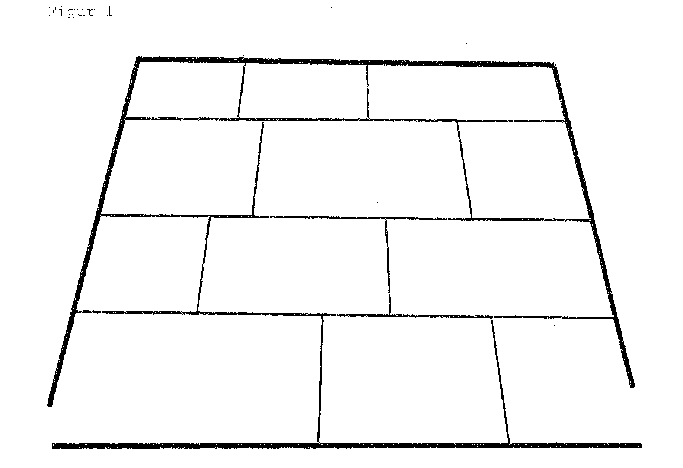

Der Pflasteraufbau wurde in einen wasserdichten PVC-Behälter mit den Maßen 50 x 50 x 39 cm (L, B, H) gesetzt. Die Pflasterfläche betrug 0,5 x 0,5 = 0,25 m². Die verwendeten Betonsteine hatten einen Flächenanteil von 87 %, die 7 mm breiten Fugen nahmen 13 % der Draufsichtsfläche ein (Figur 1). Der Flächenanteil der Fugen ist durch die notwendige flächenumrandende Fuge geringfügig höher, als bei großen Flächen (Figur 1). Diese umlaufende Randfuge war notwendig, um einen hydraulischen Kurzschluss zwischen Behälterwand und Pflasterstein zu verhindern.

### Vertikaler Aufbau

Der vertikale Aufbau entsprach der großtechnischen Bauweise (Tabelle 4). Die 4 cm mächtige Dränschicht aus Quarzsand wurde zusätzlich eingebaut, um das Sickerwasser in einer flächenmittig positionierten Schlauchableitung abführen zu können. In Tabelle 4 ist die Kornverteilung des Versuchsaufbaues angeführt.

### c. Beschickungs- und Untersuchungsprogramm

### Zeitrafferfracht

Es bestand das Ziel durch einen einmonatigen Zeitrafferversuch eine 100-jährige gelöste Zinkfracht einer hoch schadstoffbelasteten Pflasterfläche nachzubilden. Neben Zink wurde die Pflasterfläche zusätzlich mit einer geringeren Kupferfracht beschickt, da dieses Schwermetall oftmals in kleineren Mengen gemeinsam mit Zink auftritt Auf hoch belasteten Pflasterflächen wird davon ausgegangen, dass eine Ausgangskonzentration von
● 100 µg gelöstem Zink pro Liter
● 25 µg gelöstem Kupfer pro Liter
vorliegt. Es wird bei dieser Betrachtung unterstellt, dass der Hauptteil der beiden Schwermetalle dauerhaft partikelgebunden ist und deshalb nur der gelöste Anteil für die Abschätzung der Ausgangsbelastung berücksichtigt werden muss. Über die 1-monatige Versuchszeit wurde eine Wassermenge von 4000 mm mit einer Konzentration an gelöstem Zink/Kupfer von 1000/250 µg/l aufgebracht. Unterstellt man eine Sickerwassermenge von 400 mm/a und die angeführte Ausgangskonzentration an gelösten Schwermetallen (Zn = 100 µg/l, Cu = 25 µg/l), so wurde während des Versuches eine 100-fache Jahresfracht aufgebracht.

### Beschickung

Die gesamte Beschickungsmenge von 4000 l/m² wurde an 20 Tagen über einen Zeitraum eines Monates auf die Pflasterfläche aufgegeben. Pro Beschickungstag waren dies 200 l/m². Die tägliche Beschickungsmenge wurde über einen Zeitraum von 8 Stunden mit einer Gießkanne aufgegeben. Als Beschickungswasser wurde Dachwasser verwendet, das mit Zink- und Kupfersalzen versetzt wurde (1000 µg Zn/l, 250 µg Cu/l).

### Untersuchung des Wassers

Von den 20 Beschickungen wurden 11 beprobt. Zu- und Ablauf der 11 Beprobungen erfolgte aus der Mischprobe der zu- und abfließenden Wassermengen (50 l). Das Wasser wurde auf die elektrische Leitfähigkeit (Lf), den pH-Wert, die Säurekapazität (K_{S4,3}), Zink und Kupfer untersucht. Der Aufschluss der Feststoffe erfolgte mit Königswasser. Die Endbestimmung der Elemente Zink und Kupfer erfolgte mit dem optischen ICP.

### Untersuchung des Pflasteraufbaues nach Versuchsende

Nach dem Ende der 1-monatigen Beschickung wurden der Pflasteraufbau schichtweise ausgebaut und aus den 4 Schichten Fugenfüllung, Bettung, Frostschutzschicht und Dränschicht Mischproben hergestellt. Die Mischproben wurden auf Korngrößenverteilung, pH_{CaCl2}, CaCO₃, Zink und Kupfer untersucht. Weiterhin wurden die Ausgangsgehalte an Zink und Kupfer des Pflasteraufbaues vor Versuchsbeginn ermittelt. Aus der Differenz zwischen Messwerten nach Versuchsende und dem Ausgangsgehalte vor Versuchsbeginn wurde die Schwermetallanreicherung des Bettungsmaterials und Fugenfilters bestimmt.

**Tabelle 4: Schichten und deren Korngrößenverteilung des Pflasteraufbaues aus gebrochenem Muschelkalk**

| Höhe | Schicht | T+U | fS | mS | gS | fG | mG |
|---|---|---|---|---|---|---|---|
| In cm | | in % | | | | | |
| 0 - 8 | Fugenmaterial 0/2 | 2,2 | 3,6 | 31,7 | 59,6 | 2,9 | 0,0 |
| 8 - 13 | Bettungsmaterial 0/5 | 2,5 | 1,7 | 10,9 | 30,0 | 54,6 | 0,3 |
| 13 - 34 | Frostschutz 0/32 | 2,0 | 1,4 | 7,8 | 23,6 | 26,0 | 39,2 |
| 34 - 38 | Dränquarzsand | 0,1 | 0,0 | 0,2 | 91,3 | 8,4 | 0,0 |

### d. Ergebnisse

### Hydraulische Leistungsfähigkeit

Die hydraulische Leistungsfähigkeit des Versuchspflasters wurde nicht über Berechnungsversuche ermittelt. Die hydraulische Ausgangsleitfähigkeit des Pflasters (ohne Sedimenteintrag in die Fugen) lässt sich allerdings aus der 8-stündigen Beschickung mit 200 l/m² abschätzen. Unter den Randbedingungen:
- kein Sedimenteintrag
- Fugenanteil von 13 %
- Feinpartikulärer Kornanteil der Fugenfüllung (T+U < 4 %, Tabelle 4)
kann eine Infiltrationsleistung des Pflasters von größer 0,60 m pro Tag abgeschätzt werden. Rechnet man den Ausgangs-kf-Wert der Fugenfüllung (kf = 40*10⁻⁵ m/s) auf den hydraulisch wirksamen Fugenantiel von 13 % um, so ergibt sich unter gesättigtem Zustand der Fugenfüllung eine hydraulische Leitfähigkeit von 5,2*10⁻⁵ m/s. Rechnerisch kann hierdurch unter gesättigten Bedingungen im Ausgangszustand ohne Sediment eine maximale Regenspende von 520 l/s*ha über das Pflaster abgeführt werden.

### Carbonatvorrat

Der Pflasteraufbau besitzt mit ca. 80 % CaCO₃ eine sehr hohe Carbonatreserve, die die pH-Anhebung des Niederschlagswassers und eine carbonatische Schwermetallbindung bewirkt. Unter folgenden Annahmen und Versuchsbedingungen
- Sickerwassermenge 40 m³/m²*100a
- Carbonatanreicherung im Sickerwaser 0,40 mmol K_{S4.3}/l bzw. 20 mg CaCO₃/l
ergibt sich ein Carbonataustrag über das Sickerwasser in 100 Jahren von 800 g CaCO₃/m². Bezieht man diesen Austrag ausschließlich auf die Fugenfüllung (12,5 kg CaCO₃/m²), so würde in 100 Jahren rechnerisch 6,4 % des Carbonatvorrates der Fugenfüllung verbraucht. Unter realen nicht zeitgerafften Bedingungen könnte im Extremfall die Carbonatanreicherung des Sickerwassers 200 mg CaCO₃/l statt 20 mg CaCO₃/l betragen. Auch unter diesen Extrembedingungen wäre rechnerisch nach 100 Jahren erst 64 % des Carbonates der Fugenfüllung verbraucht. Der Carbonatgehalt der Fugenfüllung würde - bei gleichbleibender Fugenfüllmasse, 15,6 kg/m² - nach 100 Betriebsjahren des Pflasters noch 28,8 % CaCO₃ betragen.

Der pH-Anstieg im Sickerwasser (Tabelle 5) zeigt, dass trotz der zeitgerafften Versuchsbedingungen bzw. des hohen Wasserdurchsatzes, der unter realen Bedingungen nicht auftritt, eine ausreichende Neutralisationszeit vorhanden ist.

### Zink- und Kupferbindung

Die gemittelten Gehalte im Dränablauf bei Zink und Kupfer lagen sowohl zu Beginn als auch am Ende der Untersuchungsperiode unter 10 µg/l. Eine Zunahme der Dränablaufkonzentrationen für Zink und Kupfer im Laufe der Befrachtung konnte nicht festgestellt werden. Dies lässt darauf schließen, dass die Bindekapazität für Zink und Kupfer zu Versuchsende noch nicht erreicht war. Bestätigt wird diese Aussage durch die Bestimmung des Verbleibes der aufgegebenen, gelösten Metallsalze zum Versuchsende. Es konnte für beide Metalle ausschließlich eine Anreicherung in der Fugenfüllung festgestellt werden (Tabelle 6).

**Tabelle 5: Zu- und Ablaufkonzentrationen des Pflasteraufbaues zu Beginn und Ende des Versuches**

| | Beginn ¹ | | Ende² | |
|---|---|---|---|---|
| | Zulauf | Ablauf | Zulauf | Ablauf |
| Lf in µs/cm | 34 | 138 | 30 | 73 |
| pH | 5,6 | 7,4 | 5,1 | 8,2 |
| K_{S4.3} in mmol/l | 0,04 | 0,54 | 0,03 | 0,35 |
| Zink in µg/l | 2560 | <10 | 1770 | <10 |
| Kupfer in µg/l | 271 | <10 | 286 | <10 |

| | | | | |
|---|---|---|---|---|
| 1 Mittelwert aus Beschickung B1 2 Mittelwert aus Beschickung B20 | | | | |

**Tabelle 6: Schwermetallanreicherung und Carbonatgehalt im Pflasteraufbau nach Versuchsende**

| Höhe in cm | Schicht | Zink in mg/kg | Kupfer in mg/kg | CaCO₃ in % |
|---|---|---|---|---|
| 0 - 8 | Fugenfüllung 0/2 | 384 | 54,1 | 77,5 |
| 8 - 13 | Bettung 0/5 | 0 | 0 | 82,8 |
| 13 - 34 | Frostschutz 0/32 | 0 | 0 | 84,0 |
| 34 - 38 | Dränquarzsand | 0 | 0 | 0,0 |

| | | | | |
|---|---|---|---|---|
| Ausgangsehalte: 9,7 mg Zn/kg, 4,5 mg Cu/kg | | | | |

- Zu Versuchsende war eine kalkulatorische Zink- und Kupfermenge von 100 Betriebsjahren aufgegeben. In Tabelle 7 sind vergleichend die aufgegebenen Versuchsmengen mit der kalkulierten Jahresfracht eines hoch belasteten Pflasters angeführt.

**Tabelle 7: Versuchs- und Jahresmengen an Zink und Kupfer**

| | Versuchsmengen | Jahresmengen¹ |
|---|---|---|
| Sickerwassermenge 1/m² | 4000 | 400 |
| Zn-Ausgangskonzentration in µg/l | 1000 | 100 |
| Cu-Ausgangskonzentration in µg/l | 250 | 25 |
| Zn-Ausgangsfracht in g/m² | 4,00 | 0,04 |
| Cu-Ausgangsfracht in g/m² | 1,00 | 0,01 |

| | | |
|---|---|---|
| 1 Jahresmengen bei hoch schadstoffbelasteten Pflasterflächen | | |

### e. Schlussfolgerungen

Ein aus dem erfindungsgemäßen Filtermaterial gebildetes Bettungsmaterial und Fugenfilter besitzt eine sehr hohe Reserve zur Bindung von Zink (und auch Kupfer), die deutlich größer ist, als die kalkulierte 100-jährige Fracht einer belasteten Pflasterfläche. Die vollständige Bindung von Zink und Kupfer findet bei dieser Untersuchung ausschließlich in der 8 cm mächtigen Fuge statt. Dies zeigt die hohe Filterwirkung dieser Schicht. Nach den vorliegenden Untersuchungen stellt diese Schicht ein Optimum zwischen hydraulischer und stofflicher Filterleistung dar.

## Patentansprüche

1. Filtermaterial umfassend einen Anteil von 60 Gew.-% oder mehr an Kalksteinsand, bezogen auf des Gesamtgewicht des Filtermaterials, wobei der Kalksteinsand die folgenden Eigenschaften aufweist:
a. der Gehalt an Ton und Schluff liegt bei 7 Gew.-% oder darunter;
b. die Körnungslinie ist asymmetrisch;
c. die Körnungslinie (in halblogarithmischer Darstellung) ist stetig monoton steigend;
d. das Verhältnis des Mittelsandanteils zu dem Anteil an Ton, Schluff und Feinsand beträgt 2 oder mehr.

2. Filtermaterial gemäß Anspruch 1, wobei das Verhältnis des Mittelsandanteils zu dem Anteil an Ton, Schluff und Feinsand 2,2 oder mehr beträgt.

3. Filtermaterial gemäß Anspruch 1 oder 2, wobei der Gehalt an Ton und Schluff bei 6 Gew.-% oder darunter, bevorzugt 5 Gew.-% oder darunter, liegt.

4. Verwendung eines Filtermaterials umfassend einen Anteil von 60 Gew.-% oder mehr an Kalksteinsand, bezogen auf das Gesamtgewicht des Filtermaterials, zur Reinigung von Hofabflüssen insbesondere von Biogasanlagen.

5. Verwendung gemäß Anspruch 4, wobei das Filtermaterial ein Filtermaterial gemäß einem oder mehreren der Ansprüche 1 bis 3 ist.

6. Reinigungsanlage für Hofabflüsse insbesondere von Biogasanlagen, umfassend einen oder mehrere Filter, wobei die Filter Bodenfilter sind, die ein Filtermaterial umfassend einen Anteil von 60 Gew.-% oder mehr an Kalksteinsand, bezogen auf des Gesamtgewicht des Filtermaterials, enthalten.

7. Reinigungsanlage gemäß Anspruch 6, wobei das Filtermaterial ein Filtermaterial gemäß einem oder mehreren der Ansprüche 1 bis 3 ist.

8. Reinigungsanlage gemäß Anspruch 6 oder 7, bei der dem oder den Filtern ein Pufferbecken vorgeschaltet ist.

9. Verfahren zur Reinigung von Hofabflüssen insbesondere von Biogasanlagen, umfassend die Verwendung einer Reinigungsanlage gemäß einem oder mehreren der Ansprüche 6 bis 8.

10. Verfahren gemäß Anspruch 9, welches diskontinuierlich betrieben wird, wobei dem oder den Filtern gestattet wird zeitweise trocken zu laufen.

11. Verwendung eines Filtermaterials umfassend einen Anteil von 60 Gew.-% oder mehr an Kalksteinsand, bezogen auf des Gesamtgewicht des Filtermaterials, zur Reinigung von Regenwasser, insbesondere auf Verkehrsflächen und Siedlungsflächen.

12. Verwendung gemäß Anspruch 11, wobei das Filtermaterial ein Filtermaterial gemäß einem oder mehreren der Ansprüche 1 bis 3 ist.

13. Verwendung gemäß Anspruch 11 oder 12, wobei das Filtermaterial eingesetzt wird als Fugenmaterial in Pflaster und/oder als Bettungsmaterial in Pflaster und/oder als Filtermaterial in Regenwasserablaufrinnen.

14. Pflaster, wobei das Fugenmaterial und/oder das Bettungsmaterial aus einem Filtermaterial besteht, umfassend einen Anteil von 60 Gew.-% oder mehr an Kalksteinsand, bezogen auf das Gesamtgewicht des Filtermaterials.

15. Pflaster gemäß Anspruch 14, wobei das Filtermaterial ein Filtermaterial gemäß einem oder mehreren der Ansprüche 1 bis 3 ist.

16. Verwendung eines Filtermaterials umfassend einen Anteil von 60 Gew.-% oder mehr an Kalksteinsand, bezogen auf des Gesamtgewicht des Filtermaterials, bevorzugt eines Filtermaterials gemäß Ansprüchen 1 bis 3, zur Adsorption von NaCl, Mineralöl und/oder Zink aus wässrigen Lösungen oder Dispersionen und/oder zur Senkung des CSB-Werts wässriger Lösungen oder Dispersionen.
